# EUROPÄISCHE PATENTANMELDUNG

(11) **EP 1 454 783 A1**
(43) Veröffentlichungstag der Anmeldung: **08.09.2004**
(21) Anmeldenummer: 03005077.7
(22) Anmeldetag: 07.03.2003
(51) Int. Cl.: B60J 7/047

(54) **Lamellen-Fahrzeugdach**

(71) Anmelder: ArvinMeritor GmbH, 63128 Dietzenbach (DE)
(72) Erfinder: Eiermann, Michael, Dipl.-Ing., 64319 Pfungstadt (DE)
(74) Vertreter: Oppermann, Ewald, Dipl.-Ing.

(57) **Zusammenfassung**

Vorgeschlagen wird ein Lamellen-Fahrzeugdach mit mehreren zum wahlweisen Verschließen oder wenigstens teilweisen Freilegen einer Dachöffnung (6) vorgesehenen verschieb- und schwenkbaren Lamellen (1 bis 4), die in der Schließstellung nebeneinanderliegend einen flächigen Lamellenverbund bilden und kinematisch so miteinander verkettet sind, daß beim Freilegen und Schließen der Dachöffnung (6) Lamelle nach Lamelle bewegt wird. Die Verkettung der Lamellen (1 bis 4) erfolgt mit wenigen einfachen und von Lamelle zu Lamelle übereinstimmenden Bauelementen durch Lamellenträger (14), Gelenkstäbe (21) und Gelenkanordnungen (Anlenkstellen 20, 24). Die zeitweilige Koppelung von Lamellen-Führungsschlitten (15) beim Schließvorgang besorgen Anschlag/Anschlagflächen-Paare (29), während beim Öffnungsvorgang fortschreitend und von vorn beginnend Lamelle nach Lamelle verschoben und ausgeschwenkt wird, wobei die noch nicht in Bewegung befindlichen Lamellen durch Verriegelungsvorsprünge/Verriegelungselemente (31, 32) ortsfest gehalten werden.

## Beschreibung

Die Erfindung bezieht sich auf ein Lamellen-Fahrzeugdach mit mehreren zum wahlweisen Verschließen oder wenigstens teilweisen Freilegen einer Dachöffnung vorgesehenen verschieb- und schwenkbaren Lamellen, die in der Schließstellung nebeneinanderliegend einen flächigen Lamellenverbund bilden und kinematisch so miteinander verkettet sind, daß sie beim Freilegen und Schließen der Dachöffnung Lamelle nach Lamelle bewegt werden.

Derartige Lamellendächer sind bereits in verschiedenen Ausführungsformen vorgeschlagen worden. Bei einem bekannten Fahrzeugdach mit Lamellen (DE 43 29 580 C1) sind die einzelnen Lamellen über die Schwenkbewegungen der Lamellen steuernde Kulissenanordnungen miteinander gekoppelt. Die hierbei zur Anwendung gelangenden mechanischen Komponenten zur Führung, Steuerung und Koppelung der Lamellen sind aufwendig und vielteilig konzipiert. Hierbei können die Kulissenanordnungen erhebliche Reibungsverluste im Antriebssystem der Lamellen verursachen. Auch ist ein stabiler, klapperfreier Stand der Lamellen im Fahrbetrieb nicht gewährleistet. Darüber hinaus ist die Anordnung so getroffen, daß zunächst die in Vorwärtsfahrtrichtung des Fahrzeugs gesehen hintere Lamelle zuerst ausgeschwenkt und zuletzt in ihre Verbundlage eingeschwenkt wird, was nicht immer wünschenswert ist.

Bei einer Verstellvorrichtung für ein anderes bekanntes Multispoiler- oder Lamellendach (WO 00/48857) ist der Bewegungsablauf der Lamellen so vorgesehen, daß zunächst die in Vorwärtsfahrtrichtung des Fahrzeugs gesehen vordere Lamelle zuerst ausgeschwenkt und zuletzt in ihre Verbundlage eingeschwenkt wird, jedoch arbeitet auch diese Vorrichtung mit Steuerkulissen und benötigt einen zusätzlichen Antriebsschlitten.

Der Erfindung liegt die Aufgabe zugrunde, ein Lamellen-Fahrzeugdach von vergleichsweise einfacher und doch funktionssicherer Ausbildung bereitzustellen, bei dem die Lamellen durch wenige von Lamelle zu Lamelle identische Betätigungselemente bewegt werden und bei dem auch die ausgeschwenkten Lamellen im Fahrbetrieb einen sicheren schwingungsfreien Stand haben.

Diese Aufgabe wird erfindungsgemäß durch das im Anspruch 1 angegebene Lamellen-Fahrzeugdach gelöst. Hierbei besitzt das erfindungsgemäße Lamellen-Fahrzeugdach mehrere zum wahlweisen Verschließen oder wenigstens teilweisen Freilegen einer Dachöffnung vorgesehene verschieb- und schwenkbare Lamellen, die in der Schließstellung nebeneinanderliegend einen flächigen Lamellenverbund bilden und kinematisch so miteinander verkettet sind, daß sie beim Freilegen und Schließen der Dachöffnung Lamelle nach Lamelle bewegt werden, wobei
a) jede Lamelle an ihren beiden Schmalseiten mit jeweils einem Lamellenträger fest verbunden ist, der schwenkbar an einen Führungsschlitten angelenkt ist, welcher entlang einer allen Führungsschlitten auf derselben Seite der Lamellen gemeinsamen dachfesten Führungsschiene verschiebbar geführt ist,
b) an jeden Lamellenträger ein Gelenkstab mit einem ersten Ende angelenkt ist, dessen zweites Ende am benachbarten Führungsschlitten angelenkt ist,
c) die Anlenkstellen der Lamellenträger an jeweils zwei benachbarten Führungsschlitten mit der Anlenkstelle des ersten Endes des zugehörigen Gelenkstabs ein Gelenkdreieck bilden, bei dem sich die Anlenkstelle des ersten Endes des zugehörigen Gelenkstabs auch bei in der Schließstellung der beiden zugehörigen benachbarten Lamellen gegebenem maximalen Abstand der beiden benachbarten Führungsschlitten oberhalb der beiden Anlenkstellen an den benachbarten Führungsschlitten befindet,
d) an jedem Lamellenträger ein Anschlag und an jedem Führungsschlitten eine Anschlagfläche angeordnet sind, wobei die Anschlagfläche dem Anschlag an dem Lamellenträger des einen benachbarten Führungsschlittens und der Anschlag der Anschlagfläche an dem anderen benachbarten Führungsschlitten so zugeordnet sind, daß die Führungsschlitten über die Anschlag/Anschlagflächen-Paare bei Zugantrieb des ersten Führungsschlittens und ausgeschwenkten Lamellen sich verkettet verschieben und beginnend mit dem letzten Führungsschlitten mit ausgeschwenkter Lamelle nacheinander die Verkettung der Anschlag/ Anschlagflächen-Paare aufgehoben wird, sobald die jeweils letzte Lamelle ihre Schließstellung erreicht hat, und
e) an den Gelenkstäben Verriegelungsvorsprünge angebracht sind, die in der Schließstellung der Lamellen jeweils mit einem Verriegelungselement an den Führungsschienen so eingreifen, daß bei Druckantrieb des ersten Führungsschlittens nur dieser Führungsschlitten unter Ausschwenken seiner Lamelle verschiebbar ist, bis der erste Verriegelungsvorsprung von seinem Verriegelungselement freigegeben ist, worauf bei fortgesetztem Druckantrieb des ersten Führungsschlittens der nächste Führungsschlitten unter Ausschwenken seiner Lamelle verschiebbar ist, bis der zweite Verriegelungsvorsprung von seinem Verriegelungselement freigegeben ist, worauf eine Lamelle nach der anderen in entsprechender Weise in Öffnungsstellung ausgeschwenkt wird, solange der Druckantrieb des ersten Führungsschlittens fortgesetzt wird.

Das erfindungsgemäße Lamellen-Fahrzeugdach kommt ohne Führungs- und Steuerkulissen aus. Jeder Lamelle sind nur drei von Lamelle zu Lamelle identische Funktionsteile zugeordnet, nämlich ein Lamellenträger, ein Führungsschlitten und ein Gelenkstab. Diese wenigen einfach ausgebildeten Teile sind miteinander und mit den benachbarten Funktionsteilen'über Schwenkgelenkstellen verbunden, die einen leichtgängigen und klapperfreien Betrieb sicherstellen. Durch die Zwischenschaltung jeweils eines Gelenkstabs zwischen einem Lamellenträger und dem entgegen der Vorwärtsfahrtrichtung gesehen folgenden Führungsschlitten entsteht eine sehr standfeste Dreipunktabstützung über ein Gelenkdreieck für jede Lamelle.

Die für den Schließvorgang erforderliche temporäre enge Verkettung der Führungsschlitten wird durch einfache Anschlag/Anschlagflächen-Paare erzielt, die nacheinander beim Schließen der Lamellen außer Eingriff gelangen, bis die Führungsschlitten nur noch über die Gelenkstäbe/Lamellenträger miteinander verbunden sind. Für den Öffnungsvorgang, der auch von Lamelle zu Lamelle fortschreitend erfolgt, sind ebenfalls einfache Mittel vorgesehen, welche die noch nicht in Öffnungsbewegung befindlichen Lamellen in Schließlage festhalten, nämlich durch die an den Gelenkstäben angebrachten Verriegelungsvorsprünge und die an den Führungsschienen für die Führungsschlitten an den zugehörigen Orten vorgesehenen Verriegelungselemente. Beim Schließvorgang greifen die Verriegelungsvorsprünge an der in Fahrzeugvorwärtsfahrtrichtung hinteren Lamelle beginnend von Lamelle zu Lamelle nacheinander verriegelnd mit den jeweils zugehörigen Verriegelungselementen ein, während die Verriegelungsvorsprünge beim Öffnungsvorgang beginnend an der in Fahrzeugvorwärtsfahrtrichtung vorderen Lamelle nacheinander entriegelnd von den jeweils zugehörigen Verriegelungselementen freigegeben werden.

Vorteilhafte oder zweckmäßige Weiterbildungen des Lamellen-Fahrzeugdachs gehen aus den Unteransprüchen hervor und sind nachfolgend ebenfalls näher beschrieben.

Die bevorzugte Anordnung der Anlenkstellen für die Gelenkstäbe und die Lamellenträger an den Führungsschlitten geht aus Anspruch 2 bzw. Anspruch 3 hervor, wobei die Schwenklager für die Lamellenträger/Lamellen einbauraumsparend in der Nähe der Bodenwand der Führungsschienen angeordnet sind, was eine Voraussetzung für die angestrebte geringe Bauhöhe des Lamellen-Fahrzeugdachs ist. Eine vorteilhafte Ausbildung der Lamellenträger geht aus Anspruch 4 hervor. Die im Anspruch 5 angegebene Ausführungsform der Gelenkstäbe ermöglicht ein enges Zusammenschieben der Lamellen zur Freilegung eines großen Anteils der vorhandenen Dachöffnung, ohne daß ausgeschwenkte Lamellen mit ihren Vorderkanten an die Gelenkstäbe anstoßen können.

Die Anschläge sind an den Lamellenträgern vorzugsweise wie im Anspruch 6 angegeben angeordnet, während die zugeordneten Anschlagflächen entsprechend Anspruch 7 ausgebildet und an den Führungsschlitten angeordnet sind. Dabei können die Anschlagflächen entsprechend Anspruch 8 jeweils Bestandteil eines in die Führungsschlitten eingeformten Schlitzes sein, welcher den zugehörigen Anschlag mit Bewegungsspiel und darin verlagerbar aufnehmen kann. Um die Einführung der Anschläge in die Schlitze zu erleichtern, können die Schlitze entsprechend Anspruch 9 am Ein- und Austrittsende für die Anschläge mit Schrägflächen versehen sein.

Eine bevorzugte Ausbildung der Verriegelungsvorsprünge geht aus Anspruch 10 hervor. Die damit zusammenwirkenden Verriegelungselemente können in einfacher Weise als entsprechend angeordnete Ausnehmungen in den Führungsschienen zur Aufnahme der Vorsprünge vorgesehen sein, wie das im Anspruch 11 angegeben ist.

Die Anlenkstelle für das zweite Ende des hinteren Gelenkstabs kann entsprechend Anspruch 12 an einem an der Führungsschiene angebrachten Lagerbock vorgesehen sein. Wenn dieser nach vorn verstell- bzw. verschiebbar an der Führungsschiene angebracht ist, wie das aus Anspruch 13 hervorgeht, kann die hintere Lamelle damit in Lüfterstellung ausgeschwenkt werden, wobei die übrigen Lamellen in der Schließstellung verbleiben.

Die Erfindung wird nachfolgend anhand eines in schematischen Zeichnungen dargestellten bevorzugten Ausführungsbeispiels eines Lamellen-Fahrzeugdachs näher beschrieben. Die Zeichnungen zeigen
- Fig. 1: in perspektivischer Darstellung ein Fahrzeugdach mit vier Lamellen in Schließstellung,

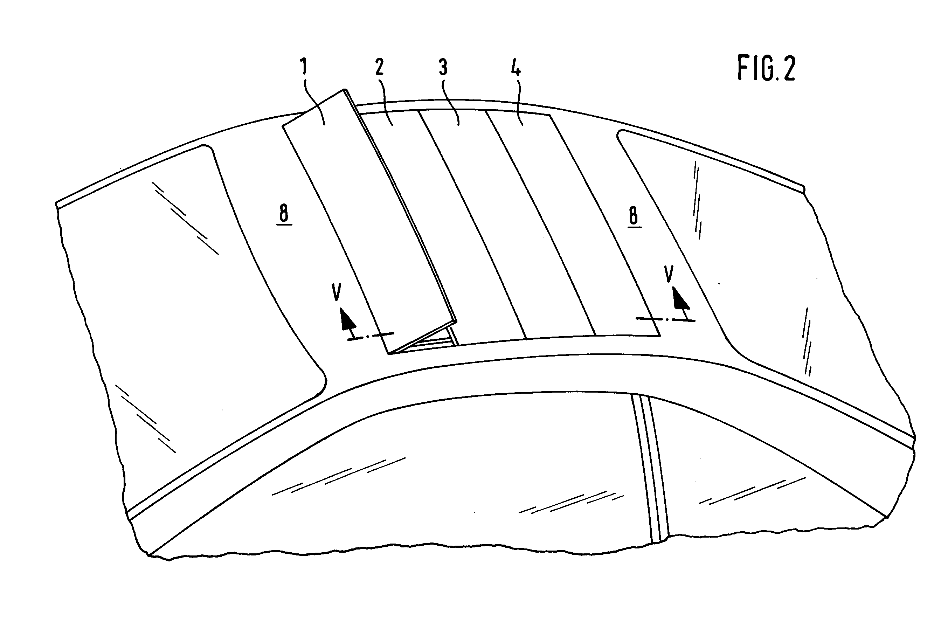

- Fig. 2: das Fahrzeugdach gemäß Fig. 1, jedoch mit ausgeschwenkter vorderer Lamelle,
- Fig. 3: das Fahrzeugdach gemäß Fig. 1 und 2, aber mit allen vier Lamellen ausgeschwenkt und maximal nach hinten verschoben,
- Fig. 4: den Schnitt durch das geschlossene Fahrzeugdach, entsprechend der Schnittverlaufslinie IV-IV in Fig. 1,
- Fig. 5: den Schnitt durch das Fahrzeugdach mit ausgeschwenkter vorderer Lamelle, entsprechend der Schnittverlaufslinie V-V in Fig. 2, dargestellt ohne angrenzende feste Dachbereiche,
- Fig. 6: eine aus Fig. 5 vergrößert und abgebrochen dargestellte Einzelheit, mit der ausgeschwenkten vorderen Lamelle und der (noch) geschlossenen Folgelamelle,
- Fig. 7: den Schnitt durch das Fahrzeugdach mit allen ausgeschwenkten und maximal nach hinten verschobenen Lamellen, entsprechend der Schnittverlaufslinie VII-VII in Fig. 3,
- Fig. 8: das Fahrzeugdach gemäß Fig. 7, jedoch in abgebrochener perspektivischer Darstellung und
- Fig. 9: den abgebrochenen Schnitt durch das Fahrzeugdach und eine geschlossene Lamelle, entsprechend der Schnittverlaufslinie IX-IX in Fig. 6.

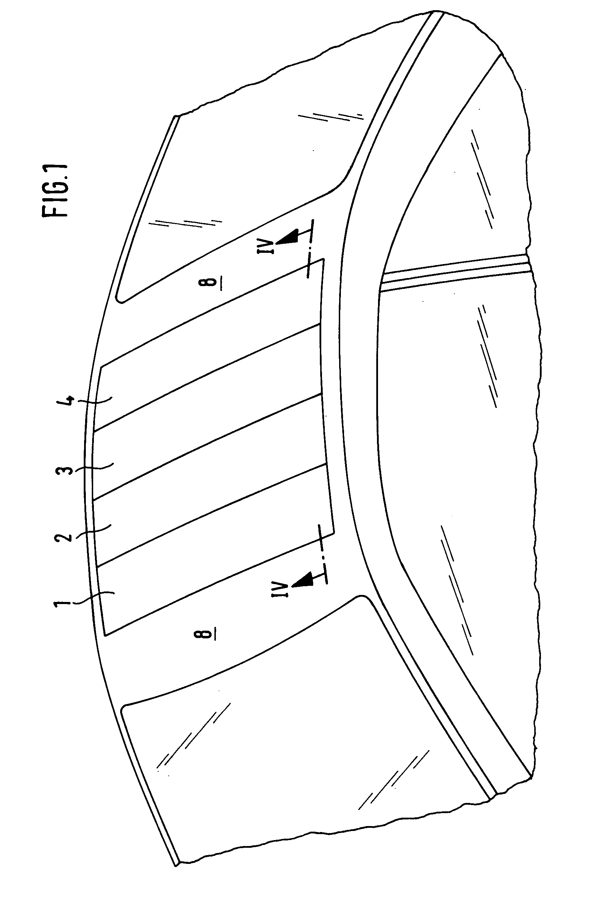

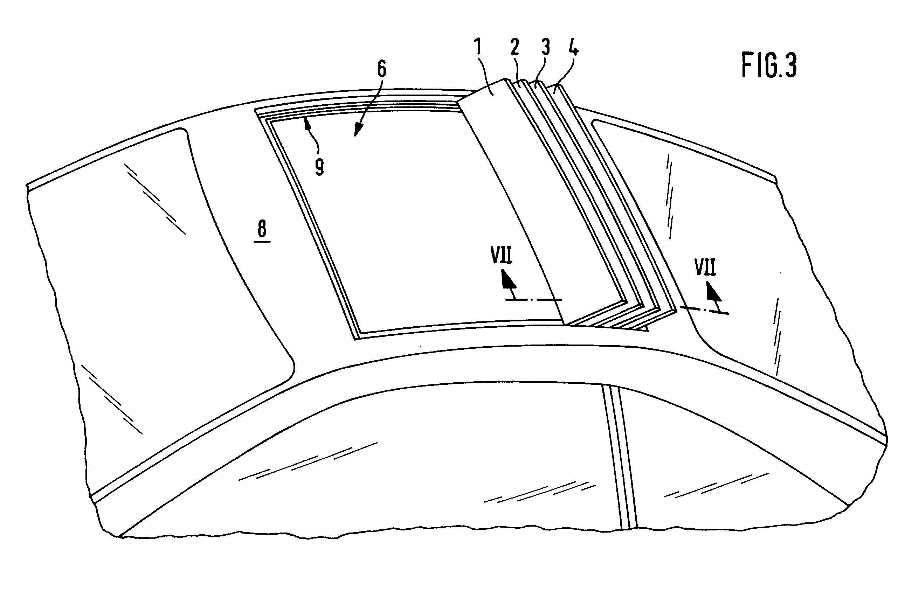

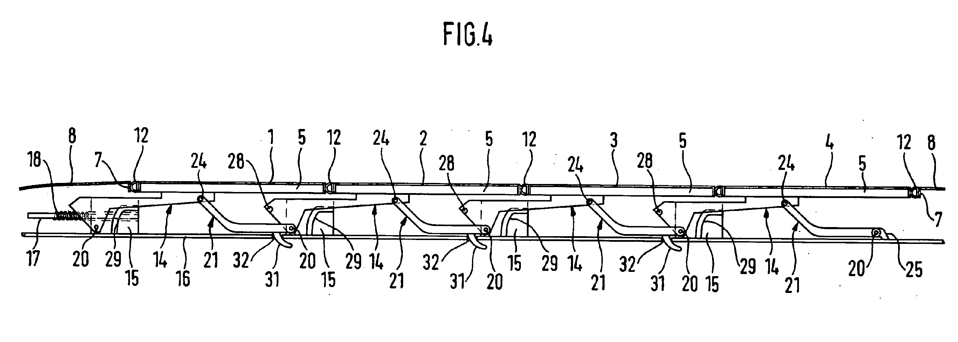

Im Ausführungsbeispiel ist das Fahrzeugdach mit vier Lamellen 1, 2, 3 und 4 dargestellt, die Lamellenzahl kann jedoch auch größer oder kleiner sein. Die Lamellen 1 bis 4 sind von gleicher Größe und besitzen eine rechteckige Umrißform. Sie können aus einem geeigneten Kunststoff, Glas oder aus Metallblech geformt sein. Wie die Schnittdarstellungen zeigen, sind im Ausführungsbeispiel die Lamellen aus allseits abgekanteten Stahl- oder Aluminiumblechen geformt und innen mit einer angeschäumten Beschichtung 5 versehen, beispielsweise aus einem Kunststoff auf PUR-Basis bestehend. In der Schließstellung bilden die vier Lamellen 1 bis 4 nebeneinanderliegend einen flächigen Lamellenverbund, wie aus Fig. 1 und 4 hervorgeht. Der Lamellenverbund verschließt die Dachöffnung 6, die in Fig. 3 maximal freigelegt ist. Die Dachöffnung 6 ist allseits von Abkantungen 7 des festen Dachblechs 8 umgeben und dadurch nach Größe und Form definiert.

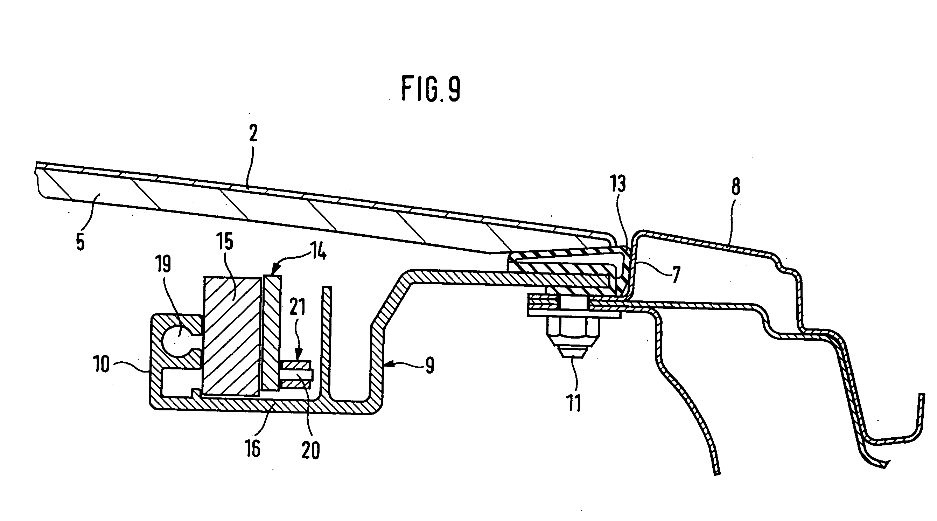

Ein in Fig. 9 dargestellter Dachrahmen 9 befindet sich unterhalb der Lamellen 1 bis 4 und innerhalb der Dachöffnung 6. Seine Innenfläche 10 umgrenzt die vom Fahrzeuginnenraum her wahrnehmbare Freifläche innerhalb der Dachöffnung 6. Im gezeigten Beispiel ist der Dachrahmen 9 mit der Fahrzeugkarosserie durch Schrauben 11 verbunden. Die Lamellen 1 bis 4 sind in der Schließstellung durch Dichtprofile 12 gegeneinander und gegenüber den vorderen und hinteren Abkantungen 7 des Dachblechs 8 abgedichtet, wie z.B. aus Fig. 4 hervorgeht. Dabei sind die Dichtprofile 12 beispielsweise an den Vorderkanten der Lamellen 1 bis 4 und an der hinteren Abkantung 7 des Dachblechs 8 befestigt. Die seitliche Abdichtung der Lamellen 1 bis 4 gegenüber der Fahrzeugkarosserie übernehmen Dichtprofile 13, die auf dem Dachrahmen 9 angebracht sind, wie aus Fig. 9 hervorgeht.

Die Lamellen 1 bis 4 sind zur Herbeiführung ihrer Verschiebe- und Schwenkbewegungen auf die nachfolgend beschriebene Weise kinematisch miteinander verkettet. Die hier bezüglich des Fahrzeugdachs und seiner Komponenten verwendeten Angaben "vorn" und "hinten" beziehen sich durchweg auf die Vorwärtsfahrtrichtung des Fahrzeugs.

Jede der Lamellen 1 bis 4 ist an ihren beiden Schmalseiten mit jeweils einem Lamellenträger 14 fest verbunden, d.h. jede Lamelle ist an zwei Lamellenträgern 14 befestigt. In den Zeichnungen ist nur die eine Seite der Lamellen dargestellt und entsprechend beschrieben. Die andere Seite ist spiegelbildlich ausgeführt. Jeder Lamellenträger 14 ist schwenkbar an einen Führungsschlitten 15 angelenkt, welcher entlang einer allen Führungsschlitten 15 auf derselben Seite der Lamellen 1 bis 4 gemeinsamen dachfesten Führungsschiene 16 verschiebbar geführt sind. Wie aus Fig. 9 hervorgeht, sind die Führungsschienen 16 beispielsweise Bestandteil des Dachrahmens 9. An den vorderen Führungsschlitten 15 greift ein flexibles Betätigungskabel 17 an, das mit einer schraubenlinienförmigen Gewindewicklung 18 versehen und in einem Führungskanal 19 drucksteif verschiebbar geführt ist. Durch das Betätigungskabel kann auf den vorderen Führungsschlitten ein Zugantrieb oder ein Druckantrieb ausgeübt werden. Zu diesem Zweck sind die Betätigungskabel beider Lamellenseiten über ein (nicht dargestelltes) hand- oder motorangetriebenes Zahnritzel geführt, welches nach Art eines Zahnstangenantriebs mit den Gewindewicklungen 18 der Betätigungskabel 17 eingreift und auf beiden Lamellenseiten jeweils gleichgerichtete Verschiebebewegungen der Betätigungskabel 17 in der einen oder anderen Richtung bewirkt, je nachdem, ob auf die beiden vorderen Führungsschlitten 15 ein Zug- oder ein Druckantrieb ausgeübt werden soll. Das Kabelantriebssystem ist bei Fahrzeugschiebedächern u.dgl. weithin üblich und bedarf daher hier keiner näheren Beschreibung.

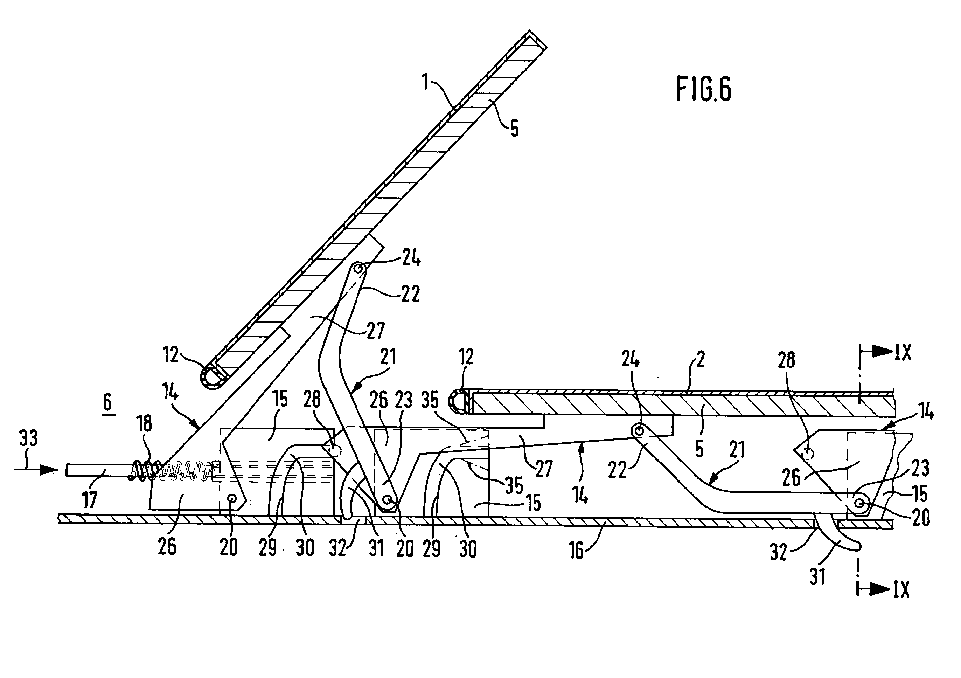

Die Anlenkstellen 20, an denen die Lamellenträger 14 an die Führungsschlitten 15 angelenkt sind, werden durch Anordnung von Schwenkzapfen/Zapfenbohrungen an den betreffenden Komponenten gebildet und ermöglichen Verschwenkungen der Lamellenträger 14 in vertikalen Schwenkebenen. Wie beispielsweise aus Fig. 6 ersichtlich ist, sind die Anlenkstellen 20 der Lamellenträger 14 an den Führungsschlitten jeweils vorn im unteren Bereich der Führungsschlitten 15 vorgesehen und befinden sich für alle Führungsschlitten 15 in derselben horizontalen Höhenebene.

An jeden Lamellenträger 14 ist ein Gelenkstab 21 mit einem ersten Ende 22 angelenkt, dessen zweites Ende 23 an die Anlenkstelle 20 des benachbarten Lamellenträgers 14 am benachbarten Führungsschlitten 15 angelenkt ist. Die Anlenkung des ersten Endes 22 erfolgt ebenfalls über eine Anlenkstelle 24, bestehend aus einer Schwenkzapfen/Zapfenbohrung-Anordnung analog der Anlenkstelle 20, und ermöglicht Relativverschwenkungen zwischen Lamellenträger 14 und Gelenkstab 21 in einer vertikalen Ebene, d.h. die Schwenkzapfen an den Anlenkstellen 20 und 24 sind achsparallel.

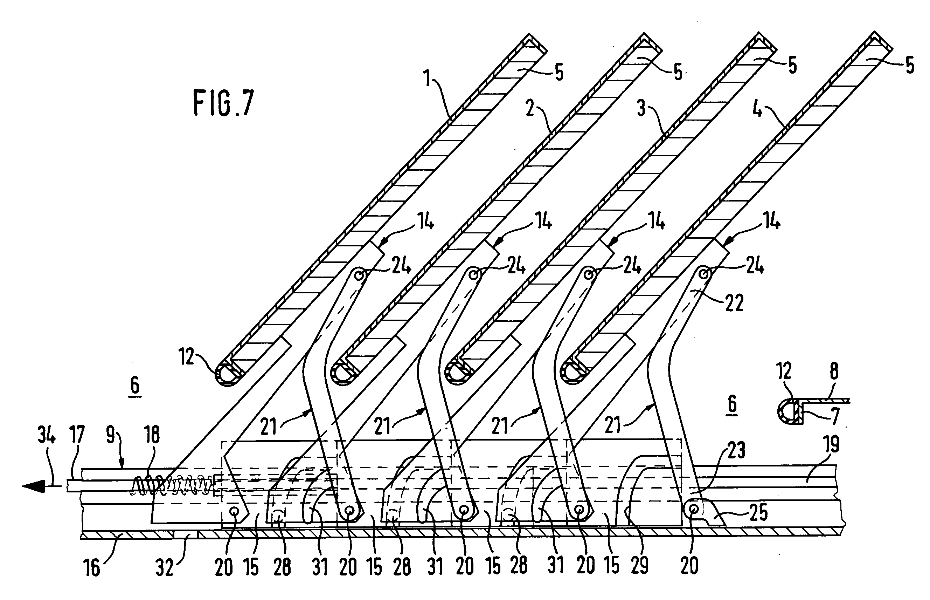

Die Verkettungsanordnung ist so getroffen, daß die Anlenkstellen 20 der Lamellenträger 14 an jeweils zwei benachbarten Führungsschlitten 15 mit der Anlenkstelle 24 des ersten Endes 22 des zugehörigen Gelenkstabs 21 ein Gelenkdreieck bilden, wie beispielsweise aus den Figuren 6 und 7 hervorgeht. Durch die erheblichen Abstände zwischen den drei Anlenkstellen 20, 20, 24 eines Gelenkdreiecks erhalten ausgeschwenkte Lamellen auch im Fahrbetrieb einen sehr sicheren schwingungsfreien Stand. Im Ausführungsbeispiel sind entsprechend der Anzahl der Lamellen 1 bis 4 vier Gelenkdreiecke vorhanden, wobei die Anlenkstelle 20 für das zweite Ende 23 des hinteren Gelenkstabs 21 anstelle eines Führungsschlittens an einem an der Führungsschiene 16 angebrachten Lagerbock 25 vorgesehen ist, wie die Figuren 4, 5 und 7 verdeutlichen. Der Lagerbock 25 kann wie gezeigt ortsfest an der Führungsschiene 16 befestigt oder zur Erzielung einer Lüfterstellung der hinteren Lamelle 4, ausgehend von der in Fig. 4 gezeigten Schließstellung, nach vorn verstellbar angeordnet sein.

Die aus den Anlenkstellen 20, 20, 24 gebildeten Gelenkdreiecke sind so aufgebaut, daß die Anlenkstelle 24 des ersten Endes 22 der Gelenkstäbe 21 auch bei in der Schließstellung der beiden zugehörigen benachbarten Lamellen gegebenen maximalen Abstand der benachbarten Führungsschlitten 15 bzw. Lagerbock 25 oberhalb der horizontalen Ebene liegt, in welcher sich die Anlenkstellen 20 befinden.

Die Lamellenträger 14 sind jeweils zweischenklig winkelförmig ausgebildet und besitzen einen kürzeren Schenkel 26 und einen längeren Schenkel 27. Der kürzere Schenkel 26 ist jeweils an die Anlenkstelle 20 des zugehörigen Führungsschlittens 15 angelenkt. An dem längeren Schenkel 27 ist die zugehörige Lamelle befestigt. Das erste Ende 22 des zugehörigen Gelenkstabs 21 ist über die Anlenkstelle 24 an den längeren Schenkel 27 angelenkt.

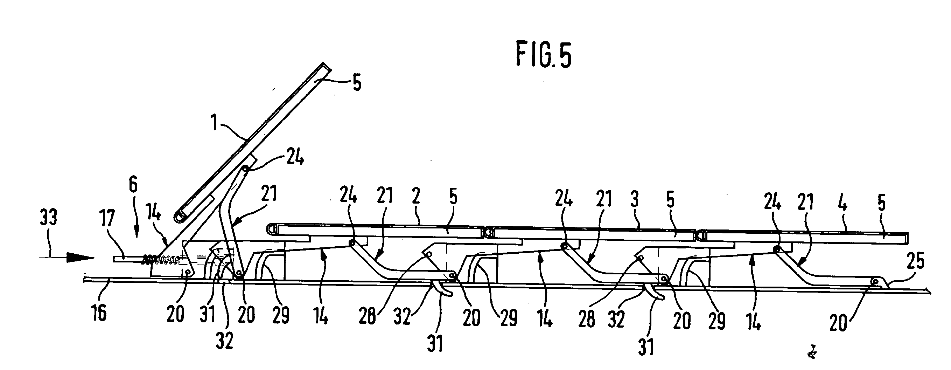

Auch die Gelenkstäbe 21 besitzen jeweils eine zweischenklige Winkelform, deren Schenkel einen stumpfen Winkel einschließen, wie beispielsweise Fig. 6 verdeutlicht. Der stumpfe Winkel ist jeweils mit seinem Scheitel dem Lamellenträger 14 zugekehrt, an welchem der Gelenkstab 21 mit seinem ersten Ende 22 angelenkt ist. Wie aus Fig. 7 hervorgeht, erlaubt diese Ausbildung der Gelenkstäbe 21 ein enges Zusammenrücken der ausgeschwenkten Lamellen 1 bis 4, ohne daß die Vorderkanten der Lamellen 1 bis 4 an die Gelenkstäbe 21 anstoßen. In der Schließstellung, vollständig in Fig. 4 und partiell in Fig. 5 dargestellt, sind die jeweils das zweite Ende 23 aufweisenden Schenkel der Gelenkstäbe 21 etwa parallel zu den geschlossenen Lamellen ausgerichtet.

An jedem Lamellenträger 14 (mit der möglichen Ausnahme des vorderen Lamellenträgers) ist ein Anschlag 28 und an jedem Führungsschlitten 15 (mit der möglichen Ausnahme des hinteren Führungsschlittens) ist eine Anschlagfläche 29 angeordnet. Die Anschläge 28 sind, bezogen auf die Schließstellung (Fig. 4), jeweils am vorderen Ende des Lamellenträgers 14 mit Abstand zur Anlenkstelle 20 des Lamellenträgers 14 angeordnet.

Die Anschlagflächen 29 weisen jeweils etwa die Form eines Kreisbogens auf, dessen Kreismittelpunkt etwa mit der Anlenkstelle 20 des unmittelbar benachbarten Lamellenträgers 14 übereinstimmt, wie Fig. 7 verdeutlicht, aus welcher eine Relativposition hervorgeht, in der die benachbarten Führungsschlitten 15 ihren minimalen Abstand bei voll ausgeschwenkten Lamellen 1 bis 4 haben. Die Länge bzw. Höhe der Anschlagflächen 29 ist so bemessen, daß die Anschlagflächen 29 oben etwa an der Eingriffstelle des zugehörigen Anschlags 28 in dessen Position bei Schließstellung (Fig. 4) des zugehörigen Lamellenträgers 14 beginnen und unten am Fuß des Führungsschlittens 15 enden.

Wie aus den Figuren 4 bis 7 hervorgeht, sind im Ausführungsbeispiel die Anschlagflächen 29 jeweils Bestandteil bzw. Wandungsteil eines in die Führungsschlitten 15 eingeformten Schlitzes 30, in welchem der zugeordnete Anschlag 28 bei Annäherung benachbarter Führungsschlitten 15 oder bei deren Auseinanderrücken verlagerbar ist. Der Schlitz 30 kann zur Erleichterung des Eintritts des zugeordneten Anschlags 28 an seinem äußeren Ende unten, aber auch zusätzlich oben mit einer Schrägfläche 35 versehen sein, wie das in Fig. 6 am Beispiel des Führungsschlittens 15 für Lamelle 2 in Strich-Punkt-Linien angedeutet ist.

Die Anschläge 28 und die Anschlagflächen 29 sind einander so zugeordnet, daß jeweils benachbarte Anschlag/Anschlagflächen-Paare zusammenarbeiten. Das geschieht auf die Weise, daß die Führungsschlitten 15 über die Anschlag/Anschlagflächen-Paare bei Zugantrieb des vorderen Führungsschlittens 15 und ausgeschwenkten Lamellen (Fig. 7) sich verkettet an den Führungsschienen 16 verschieben und beginnend mit dem hinteren Führungsschlitten 15 mit ausgeschwenkter Lamelle nacheinander die Verkettung der Anschlag/Anschlagflächen-Paare aufgehoben wird, sobald die jeweils hintere Lamelle ihre Schließstellüng erreicht hat.

An den Gelenkstäben 21 sind (mit der möglichen Ausnahme des hinteren Gelenkstabs) Verriegelungsvorsprünge 31 angebracht, die in der Schließstellung der Lamellen 1 bis 4 jeweils mit einem an den Führungsschienen 16 ortsfesten Verriegelungselement 32 so eingreifen, daß bei Druckantrieb des vorderen Führungsschlittens 15 zunächst nur dieser Führungsschlitten 15 unter Ausschwenken seiner Lamelle 1 verschiebbar ist, bis der erste Verriegelungsvorsprung 31 von seinem Verriegelungselement freigegeben ist. Bei danach fortgesetztem Druckantrieb des vorderen Führungsschlittens 15 ist der nächste Führungsschlitten 15 unter Ausschwenken seiner Lamelle 2 verschiebbar, bis der zweite Verriegelungsvorsprung 31 von seinem Verriegelungselement 32 freigegeben ist. Dieser Vorgang wiederholt sich bei fortgesetztem Druckantrieb von Lamelle zu Lamelle, bis gewünschtenfalls alle Lamellen in Öffnungstellung ausgeschwenkt sind.

Wie am deutlichsten aus den Figuren 6 und 7 hervorgeht, weisen die Verriegelungsvorsprünge 31 an den Gelenkstäben 21 jeweils etwa die Form eines Kreisringabschnitts auf, dessen Kreismittelpunkte etwa mit der Anlenkstelle 20 des betreffenden Gelenkstabs 21 an dem zugehörigen Führungsschlitten 15 übereinstimmen.

Die Verriegelungselemente 32 für die Verriegelungsvorsprünge 31 können als einfache Ausnehmungen in der Bodenwand der Führungsschienen 16 ausgebildet sein, wie das in den Figuren 4 bis 8 gezeigt ist. Die gegenseitigen Abstände dieser Ausnehmungen entsprechen den Abständen zwischen den Verriegelungsvorsprüngen 31 in der Schließstellung der Lamellen 1 bis 4.

Zur Erläuterung der Bewegungsabläufe beim Öffnen und Schließen der Lamellen 1 bis 4 wird für den Öffnungsvorgang zunächst auf die Figuren 4 bis 6 Bezug genommen. Wenn ausgehend von der vollständigen Schließstellung der Lamellen 1 bis 4 gemäß Fig. 4 in Richtung des Pfeils 33 (Figuren 5 und 6) über das Betätigungskabel 17 ein Druckantrieb des vorderen Führungsschlittens 15 erfolgt, wird zunächst nur der vordere Führungsschlitten 15 nach hinten verschoben, während die drei anderen Führungsschlitten infolge des Eingriffs der Verrieglungsvorsprünge 31 mit den Verriegelungselementen 32 in ihrer jeweiligen Position verharren. Ausgelöst durch die Verschiebung des vorderen Führungsschlittens 15 laufen verschiedene Vorgänge gleichzeitig ab: Der vordere Lamellenträger 14 stützt sich über die vordere Anlenkstelle 24 des vorderen Gelenkstabs 21 an der Anlenkstelle 20 des noch festgehaltenen zweiten Führungsschlittens 15 ab, die vordere Anlenkstelle 24 verlagert sich nach oben, der vordere Lamellenträger 14 verschwenkt um seine Anlenkstelle 20 im Gegenuhrzeigersinn (bezogen auf die Zeichnungsdarstellungen) nach oben und schwenkt dabei auch die Lamelle 1 nach oben, der vordere Gelenkstab 21 verschwenkt um seine Anlenkstelle 20 im Uhrzeigersinn, der Verriegelungsvorsprung 31 des vorderen Gelenkstabs 21 bewegt sich in der sein Verriegelungselement 32 bildenden Ausnehmung im Sinne eines Austritts aus derselben, und der vordere oder erste Führungsschlitten 15 nähert sich dem noch festgehaltenen zweiten Führungsschlitten 15.

Der Druckantrieb des vorderen Führungsschlittens 15 kann hierbei in jeder Ausschwenkstellung der ersten Lamelle 1 unterbrochen werden, wenn ein vorderer Lüftungsspalt bei spoilerähnlich ausgeschwenkter vorderer Lamelle 1 gewünscht wird. Fig. 6 zeigt die Relativlage der Bauteile vor Auftreffen des vorderen Führungsschlittens 15 auf den zweiten Führungsschlitten. Der Verriegelungsvorsprung 31 hat sich fast vollständig aus seinem Verriegelungselement 32 herausbewegt, und der Anschlag 28 an dem Lamellenträger 14 der zweiten Lamelle beginnt in den Schlitz 30 einzutreten. In Fig. 5 liegt der vordere Führungsschlitten 15 dem zweiten Führungsschlitten 15 an, die Lamelle 1 ist maximal ausgeschwenkt, der erste Verriegelungsvorsprung 31 ist vollständig aus seinem Verriegelungselement 32 ausgetreten, und der Anschlag 28 hat den horizontalen Abschnitt des Schlitzes 30 durchwandert und steht nun am oberen Ende der Anschlagfläche 29.

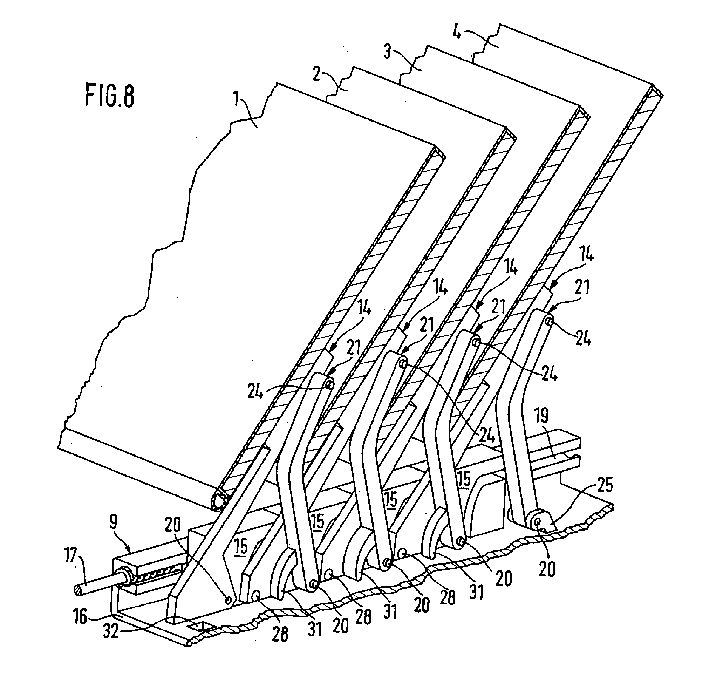

Wird jetzt der Druckantrieb des vorderen Führungsschlittens 15 fortgesetzt, werden daraufhin der vordere Führungsschlitten 15 und der zweite Führungsschlitten 15 gemeinsam verschoben, so daß sich der bezüglich der Lamelle 1 beschriebene Bewegungsablauf beim Ausschwenken der Lamelle 2 wiederholt, wobei der Anschlag 28 an dem Lamellenträger 14 der Lamelle 2 um die zugehörige Anlenkstelle 20 verschwenkt und an der zugehörigen Anschlagfläche 29 nach unten bewegt wird, bis er die in Fig. 7 gezeigte Stellung einnimmt. Bei fortgesetztem Druckantrieb des vorderen Führungsschlittens 15 erreichen alle Lamellen 1 bis 4 nacheinander die in den Figuren 7 und 8 gezeigte Stellung bis zur vollen Öffnung des Fahrzeugdachs und bei eng aneinanderliegenden Lamellen 1 bis 4. Hierbei hat sich der hintere Führungsschlitten 15 an den Lagerbock 25 wegbegrenzend angelegt. Der Öffnungsbewegungsvorgang kann aber in jeder Zwischenstellung unterbrochen werden, beispielsweise in der Stellung, in welcher die beiden vorderen Lamellen 1 und 2 vollständig ausgeschwenkt und die beiden hinteren Lamellen 3 und 4 noch vollständig geschlossen sind. Auf diese Weise können unterschiedlich große Flächenanteile der Dachöffnung freigelegt werden.

Soll das vollständig geöffnete Lamellendach geschlossen werden, erfolgt über das Betätigungskabel 17 ein Zugantrieb auf den vorderen Führungsschlitten 15 in Richtung des Pfeils 34 in Fig. 7. Durch die drei im Eingriff stehenden Anschlag/Anschlagflächen-Paare 28/29 sind alle vier Führungsschlitten 15 (zunächst) miteinander gekoppelt und folgen der Richtung des Pfeils 34. Da aber der hintere Gelenkstab 21 an den ortsfesten Lagerbock 25 angelenkt ist, beginnt der hintere Lamellenträger 14 und damit die hintere Lamelle 4 infolge der Anlenkung des hinteren Gelenkstabs 21 an den hinteren Lamellenträger 14 sofort die Einschwenkbewegung um die vorletzte Anlenkstelle 20 als Drehpunkt. Dabei bewegt sich der am hinteren Lamellenträger 14 befindliche Anschlag 28 an seiner Anschlagfläche 29 nach oben.

Der Einschwenkvorgang der letzten Lamelle 4 ist abgeschlossen, wenn diese ihre Schließstellung erreicht hat. Der hintere Anschlag 28 ist jetzt von der zugehörigen Anschlagfläche 29 freigegeben, so daß sich bei fortgesetztem Zugantrieb der vorletzte Führungsschlitten 15 von dem hinteren in seiner Grenzlage stillstehenden Führungsschlitten entfernt. Dabei verschwenken jetzt der vorletzte Gelenkstab 21 und der vorletzte Lamellenträger 14 mit seiner Lamelle 3, wobei gegen Ende dieses Bewegungsablaufs der Verriegelungsvorsprung 31 des vorletzten Gelenkstabs 21 in das zugehörige Verriegelungselement 32 an der Führungsschiene 16 eintritt. Wird der Zugantrieb bis zum vollständigen Schließen der Dachöffnung fortgesetzt, schreitet der Lamellenschließvorgang von hinten nach vorn fort, kann jedoch jederzeit in gewünschten Zwischenstellungen unterbrochen werden. Beim Schließen jeder weiteren Lamelle tritt der zugehörige Verriegelungsvorsprung 31 in das ihm ortsfest zugeordnete Verriegelungselement 32 an der Führungsschiene 16 ein. Die Zugmitnahme zwischen benachbarten Führungsschlitten 15 endet immer dann, wenn die Anschläge 28 nicht mehr den jeweils zugehörigen Anschlagflächen 29 anliegen.

Vorgeschlagen wird ein Lamellen-Fahrzeugdach mit mehreren zum wahlweisen Verschließen oder wenigstens teilweisen Freilegen einer Dachöffnung vorgesehenen verschieb- und schwenkbaren Lamellen, die in der Schließstellung nebeneinanderliegend einen flächigen Lamellenverbund bilden und kinematisch so miteinander verkettet sind, daß beim Freilegen und Schließen der Dachöffnung Lamelle nach Lamelle bewegt wird. Die Verkettung der Lamellen erfolgt mit wenigen einfachen und von Lamelle zu Lamelle übereinstimmenden Bauelementen durch Lamellenträger, Gelenkstäbe und Gelenkanordnungen. Die zeitweilige Koppelung von Lamellen-Führungsschlitten beim Schließvorgang besorgen Anschlag/Anschlagflächen-Paare, während beim Öffnungsvorgang fortschreitend und von vorn beginnend Lamelle nach Lamelle verschoben und ausgeschwenkt wird, wobei die noch nicht in Bewegung befindlichen Lamellen durch Verriegelungsvorsprünge und Verriegelungselemente ortsfest gehalten werden.

### Bezugszeichenliste

- 1: Lamelle
- 2: Lamelle
- 3: Lamelle
- 4: Lamelle
- 5: Beschichtung
- 6: Dachöffnung
- 7: Abkantungen
- 8: Dachblech
- 9: Dachrahmen
- 10: Innenfläche
- 11: Schrauben
- 12: Dichtprofile
- 13: Dichtprofile
- 14: Lamellenträger
- 15: Führungsschlitten
- 16: Führungsschiene
- 17: Betätigungskabel
- 18: Gewindewicklung
- 19: Führungskanal
- 20: Anlenkstellen
- 21: Gelenkstab
- 22: erstes Ende
- 23: zweites Ende
- 24: Anlenkstelle
- 25: Lagerbock
- 26: kürzerer Schenkel
- 27: längerer Schenkel
- 28: Anschlag
- 29: Anschlagfläche
- 30: Schlitz
- 31: Verriegelungsvorsprünge
- 32: Verriegelungselement
- 33: Pfeil
- 34: Pfeil
- 35: Schrägfläche

## Patentansprüche

1. Lamellen-Fahrzeugdach mit mehreren zum wahlweisen Verschließen oder wenigstens teilweisen Freilegen einer Dachöffnung vorgesehenen verschieb- und schwenkbaren Lamellen (1 bis 4), die in der Schließstellung nebeneinanderliegend einen flächigen Lamellenverbund bilden und kinematisch so miteinander verkettet sind, daß sie beim Freilegen und Schließen der Dachöffnung (6) Lamelle nach Lamelle bewegt werden, wobei
a) jede Lamelle (1 bis 4) an ihren beiden Schmalseiten mit jeweils einem Lamellenträger (14) fest verbunden ist, der schwenkbar an einen Führungsschlitten (15) angelenkt ist, welcher entlang einer allen Führungsschlitten (15) auf derselben Seite der Lamellen (1 bis 4) gemeinsamen dachfesten Führungsschiene (16) verschiebbar geführt sind,
b) an jeden Lamellenträger (14) ein Gelenkstab (21) mit einem ersten Ende (22) angelenkt ist, dessen zweites Ende (23) am benachbarten Führungsschlitten (15) angelenkt ist,
c) die Anlenkstellen (20) der Lamellenträger (14) an jeweils zwei benachbarten Führungsschlitten (15) mit der Anlenkstelle (24) des ersten Endes (22) des zugehörigen Gelenkstabs (21) ein Gelenkdreieck bilden, bei dem sich die Anlenkstelle (24) des ersten Endes (22) des zugehörigen Gelenkstabs (21) auch bei in der Schließstellung der beiden zugehörigen benachbarten Lamellen gegebenen maximalen Abstand der benachbarten Führungsschlitten (15, 15) oberhalb der beiden Anlenkstellen (20) an den benachbarten Führungsschlitten (15, 15) befindet,
d) an jedem Lamellenträger (14) ein Anschlag (28) und an jedem Führungsschlitten (15) eine Anschlagfläche (29) angeordnet sind, wobei die Anschlagfläche (29) dem Anschlag (28) an dem Lamellenträger (14) des einen benachbarten Führungsschlittens (15) und der Anschlag (28) der Anschlagfläche (29) an dem anderen benachbarten Führungsschlitten (15) so zugeordnet sind, daß die Führungsschlitten (15) über die Anschlag/Anschlagflächen-Paare (28, 29) bei Zugantrieb des ersten Führungsschlittens (15) und ausgeschwenkten Lamellen sich verkettet verschieben und beginnend mit dem letzten Führungsschlitten (15) mit ausgeschwenkter Lamelle (4) nacheinander die Verkettung der Anschlag/Anschlagflächen-Paare (28, 29) aufgehoben wird, sobald die jeweils letzte Lamelle ihre Schließstellung erreicht hat, und
e) an den Gelenkstäben (21) Verriegelungsvorsprünge (31) angebracht sind, die in der Schließstellung der Lamellen jeweils mit einem Verriegelungselement (32) an den Führungsschienen (16) so eingreifen, daß bei Druckantrieb des ersten Führungsschlittens (15) nur dieser Führungsschlitten unter Ausschwenken seiner Lamelle (1) verschiebbar ist, bis der erste Verriegelungsvorsprung (31) von seinem Verriegelungselement (32) freigegeben ist, worauf bei fortgesetztem Druckantrieb des ersten Führungsschlittens (15) der nächste Führungsschlitten (15) unter Ausschwenken seiner Lamelle (2) verschiebbar ist, bis der zweite Verriegelungsvorsprung (31) von seinem Verriegelungselement (32) freigegeben ist, worauf eine Lamelle nach der anderen in entsprechender Weise in Öffnungsstellung ausgeschwenkt wird, solange der Druckantrieb des ersten Führungsschlittens (15) fortgesetzt wird.

2. Lamellen-Fahrzeugdach nach Anspruch 1, **dadurch gekennzeichnet, daß** das zweite Ende (23) der Gelenkstäbe (21) an die Anlenkstelle (20) des benachbarten Lamellenträgers (14) am benachbarten Führungsschlitten (15) angelenkt ist.

3. Lamellen-Fahrzeugdach nach Anspruch 1 oder 2, **dadurch gekennzeichnet, daß** die Anlenkstellen (20) der Lamellenträger (14) an den Führungsschlitten (15) jeweils vorn im unteren Bereich der Führungsschlitten (15) vorgesehen sind.

4. Lamellen-Fahrzeugdach nach einem der Ansprüche 1 bis 3, **dadurch gekennzeichnet, daß** die Lamellenträger (14) zweischenklig winkelförmig mit einem kürzeren und einem längeren Schenkel (26, 27) ausgebildet sind, dessen kürzerer Schenkel (26) an die Anlenkstelle (20) des zugehörigen Führungsschlittens (15) angelenkt ist und an dessen längerem Schenkel (27) die zugehörige Lamelle (1 bis 4) befestigt und das erste Ende (22) des zugehörigen Gelenkstabs (21) angelenkt ist.

5. Lamellen-Fahrzeugdach nach einem der Ansprüche 1 bis 4, **dadurch gekennzeichnet, daß** die Gelenkstäbe (21) eine zweischenklige Winkelform besitzen, deren Schenkel einen stumpfen Winkel einschließen, der mit seinem Scheitel dem Lamellenträger (14) zugekehrt ist, an welchem der Gelenkstab (21) mit seinem ersten Ende (22) angelenkt ist, und dessen das zweite Ende (23) aufweisender Schenkel in der Schließstellung der zugehörigen Lamelle und des Lamellenträgers (14) etwa parallel zur Lamelle ausgerichtet ist.

6. Lamellen-Fahrzeugdach nach einem der Ansprüche 1 bis 5, **dadurch gekennzeichnet, daß** die Anschläge (28), bezogen auf die Schließstellung, jeweils am vorderen Ende des Lamellenträgers (14) mit Abstand zur Anlenkstelle (20) des Lamellenträgers (14) angeordnet sind.

7. Lamellen-Fahrzeugdach nach einem der Ansprüche 1 bis 6, **dadurch gekennzeichnet, daß** die Anschlagflächen (29) jeweils etwa die Form eines Kreisbogens aufweisen, dessen Kreismittelpunkt etwa mit der Anlenkstelle (20) des unmittelbar benachbarten Lamellenträgers (14) übereinstimmt, in einer Relativposition betrachtet, in der die zugehörigen benachbarten Führungsschlitten (15) ihren minimalen Abstand bei voll ausgeschwenkten Lamellen haben, wobei die Anschlagfläche (29) oben etwa an der Eingriffstelle des zugehörigen Anschlags (28) in dessen Position bei Schließstellung des zugehörigen Lamellenträgers (14) beginnt und unten am Fuß des Führungsschlittens (15) endet.

8. Lamellen-Fahrzeugdach nach einem der Ansprüche 1 bis 7, **dadurch gekennzeichnet, daß** die Anschlagflächen (29) jeweils Bestandteil eines in die Führungsschlitten (15) eingeformten Schlitzes (30) sind, in welchem der zugeordnete Anschlag (28) bei Annäherung benachbarter Führungsschlitten (15) oder bei deren Auseinanderrücken verlagerbar ist.

9. Lamellen-Fahrzeugdach nach Anspruch 8, **dadurch gekennzeichnet, daß** der Schlitz (30) an seinem Ein- und Austrittsende für den zugeordneten Anschlag (28) mit mindestens einer den Schlitz (30) nach außen erweiternden Schrägfläche (35) versehen ist.

10. Lamellen-Fahrzeugdach nach einem der Ansprüche 1 bis 9, **dadurch gekennzeichnet, daß** die Verriegelungsvorsprünge (31) an den Gelenkstäben (21) jeweils etwa die Form eines Kreisringabschnitts aufweisen, dessen Kreismittelpunkte etwa mit der Anlenkstelle (20) des betreffenden Gelenkstabs (21) an dem zugehörigen Führungsschlitten (15) übereinstimmen.

11. Lamellen-Fahrzeugdach nach einem der Ansprüche 1 bis 10, **dadurch gekennzeichnet, daß** die Verriegelungselemente (32) für die Verriegelungsvorsprünge (31) als Ausnehmungen in den Führungsschienen (16) ausgebildet sind, deren gegenseitige Abstände den Abständen zwischen den Verriegelungsvorsprüngen (31) in der Schließstellung der Lamellen (1 bis 4) entsprechen.

12. Lamellen-Fahrzeugdach nach einem der Ansprüche 1 bis 11, **dadurch gekennzeichnet, daß** die Anlenkstelle (20) für das zweite Ende (23) des hinteren Gelenkstabs (21) an einem an der Führungsschiene (16) angebrachten Lagerbock (25) vorgesehen ist.

13. Lamellen-Fahrzeugdach nach Anspruch 12, **dadurch gekennzeichnet, daß** der Lagerbock (25) ausgehend von der Schließstellung der hinteren Lamelle (4) zur Ausstellung dieser Lamelle (4) in eine Lüfterstellung nach vorn verstellbar ist.
